# EUROPEAN PATENT SPECIFICATION

(11) **EP 0 981 419 B1**
(45) Date of publication and mention of the grant of the patent: **06.02.2002**
(21) Application number: 98909605.2
(22) Date of filing: 11.03.1998
(51) Int. Cl.: B24B 41/02, B24B 7/00, B23Q 1/01, B23Q 1/26

(54) **GRINDING OR LIKE MACHINE TOOL**
SCHLEIFMASCHINE
RECTIFIEUSE OU MACHINE OUTIL SIMILAIRE

(30) Priority: 12.03.1997 GB 9705134
(43) Date of publication of application: 01.03.2000
(73) Proprietor: Jones & Shipman PLC, Leicester LE3 2LF (GB)
(72) Inventor: PRATT, Jeffrey, Leicestershire LE8 6LE (GB)
(74) Representative: Spoor, Brian
(86) International application number: GB9800734
(87) International publication number: WO9840191

(56) References cited:
- US-A- 2 927 405
- US-A- 3 481 082
- US-A- 4 114 015

## Description

This invention relates to grinding machines and similar machine tools and in particular, but not exclusively, to surface grinding machines.

Hitherto surface grinding machines have been currently or traditionally of the forms diagrammatically shown in Figures A. B and C of the accompanying drawings. These machines basically comprise a bed 1; a work table 2 horizontally movable or reciprocatable along an X axis generally on the bed 1; usually a saddle or backslide 3 (Figures A and B) horizontally movable on the bed along a traversing Z axis, and a column 4 upstanding from the bed 1 or backslide 3 (Figure B) and carrying a wheelhead 5 for at least vertical feeding/retraction movement along a Y-axis in relation to a workpiece on the table 2.

In all cases of the above current machines the wheelhead 5 is fed downwardly on the Y-axis onto a workpiece or component to be ground on the work table 2.

Thus in the case of the moving saddle machine shown in Figure A, the bed 1 slidably carries along the Z axis the saddle 3 which in turn carries the table 2 slidable thereon for reciprocation along the X axis. The column 4 upstanding from the bed 1 carries the wheelhead 5, vertically movable along the Y axis. These machines are usually regarded as the most geometrically accurate since the grinding load assists the gravitational load of a workpiece (or workpieces) on both the table and saddle slideways.

However they do suffer from the adverse effects of overhang in that the table 2 usually overhangs the saddle 3 and the latter overhangs the bed 1, i.e. the table 2 and saddle 3 are not fully supported by their slideways. This drawback is also aggravated by inertial effects particularly due to the table 2 and workpiece which travel at appreciable velocities with direction reversal every few seconds (known as pendulum grinding). In addition the fact that the size and weight of the workpiece varies and therefore the effective mass and stroke of the table 2 along the X axis varies, also contributes to variation of machine accuracy.

Furthermore these machines generally have a tall slender column 4 (usually of constrained width by saddle paws 30) which together with the overhang of the wheelhead 5 create a structure which lacks stiffness.

Referring to the moving backslide machine shown in Figure B this has the advantage that the table 2 is directly mounted for reciprocating movement on the bed 1 and that the bed can be of a length for fully, or substantially fully, supporting the table 2. This entails the provision of a lengthy bed for table support whilst the bed is also of considerable rearward depth to support the backslide or saddle 3.

The disadvantage of this machine is that the saddle slideways become more remotely displaced from the grinding zone and therefore errors in the straightness of the slideways are amplified. Attempts have sometimes been made to overcome this disadvantage by raising the bed 1 at the back to provide the saddle slideways nearer to the grinding height. In general however this results in a lack of stiffness and an inferior aspect ratio.

These machines also still suffer from variations in geometric accuracy due to variations in the mass of the reciprocated workpiece or component. They still have a relatively slender column 4 carried by the backslide 3.

The moving head machine shown in Figure C tends to be a larger size of machine with a wide worktable 2 and wherein the mass to be transversed (Z axis) is minimised, i.e. to only the mass of the wheelhead 5 with its carrier 50 and driving motor 55. (This is considerably less than the mass of a saddle 3 and table 2 with a workpiece thereon and also much less than that of a backslide 3 carrying a column 4 and wheelhead 5).

Whereas the machine can have a long bed 1 to fully or largely support the table 2, the wheelhead unit 5, 50, 55 is carried by a relatively tall and slender column 4 and the moveable wheelhead 5 has a variable overhang which gives rise to variations in geometric accuracy.

The document US-A- 3 481 082 relates to a machine tool which, too, is provided with a column. On the column, therein is mounted a cross-slide carrying the tool. The work table, which is vertically adjustable, is in front of the column.

Workpieces or components on these wide table machines can be very heavy and thus create large forces during reciprocating or pendulum grinding.

In all grinding machines of the general kind under consideration it is usual to mount the slidable parts especially the worktable or the saddle or the wheel head as the case may be on V-form and flat slideways and consequently couples are applied to the V-form slideway by the offset of the variable mass of the workpiece or component during grinding and to both the V-form and flat guideways by the variation in mass and height of the component.

Careful consideration of the disadvantages of the above described traditional grinding machines has resulted in the conception of the present invention which has for its principal object to provide an improved and radically different construction and arrangement of grinding or like machine tool having a much superior degree of geometrical accuracy along with better structural strength, stiffness and stability. A further object is to provide a high capacity machine of compact form requiring a minimum of operational floor space (known as "footprint") and which is also ergonomically suited for the machine operator. These and several other practical features and advantages of the invention will be apparent from the following description.

Basically in accordance with this invention, which is defined in claim 1 a grinding or like machine tool is provided in which the front face of a generally rectangular machine bed carries a work table for Y axis vertical travelling movement or adjustment and in which the top of the bed slidably carries a saddle which in turn slidably carries at least one grinding wheel head or like machining head for movement at right angles to the movement of the saddle whereby the or each grinding wheel or like machining head is positioned over the work table and is operated for X axis reciprocating or uni-directional longitudinal movement and Z axis traversing movement in relation to the work table and a workpiece or workpieces when placed thereon, by relative sliding movements of the saddle and wheel or like machining head or heads on the top of the machine bed.

Preferably the saddle is slidably carried on the machine bed for Z axis traversing movement at right angles to the work table and the or each wheel or like machining head is slidably carried by the saddle for X axis longitudinal or reciprocating movement parallel with and over the work table.

The work table is fixedly carried by a support member or knee mounted for vertical travelling or sliding movement only on the machine bed. Thus the table remains fixed against longitudinal or reciprocating movement relative to the machine bed.

In a practical example of a surface grinding machine according to the invention reference is made to the further accompanying drawings in which:-
- Figure 1: is a diagrammatic front perspective view of the machine;
- Figure 2: is a more detailed front perspective view;
- Figure 3: is a detail side elevation of the wheel head assembly;
- Figure 4: is a detail perspective view of an indexing fixture development;
- Figures 5 and 6: are diagrammatic front and side elevations respectively of a twin wheel head development of the machine;
- Figures 7 and 8: are similar views of a further twin wheel head arrangement, and
- Figures 9 and 10: are similar views of a vertical axis wheel head arrangement.

Like or associated parts are referred to throughout all the drawings by the same or similar reference numerals. mounted for vertical sliding Y axis movement or adjustment only on the front face of the bed 10 by slideways 110. Thus the table 12 is firmly supported in this way and does not perform any longitudinal or reciprocating movement.

A saddle 13 is mounted by slideways 130 on the top of the bed 10 for traversing Z axis movement towards and away from the table 12 and at right angles to it. A carrier slide 16 mounted on slideways 160 on the saddle 13 for X axis movement fixedly carries at right angles to it a wheelhead 15 together with an associated carrier 150 and driving motor 155 so that the wheelhead 15 over hangs the table 2. The slide 16 is movable on the saddle 13 for X axis movement along slideways 160 parallel with the table 12 and thus for longitudinal or reciprocating movement of the wheelhead 15 and grinding wheel 17 over the table 12 for grinding a workpiece thereon.

The knee 11, saddle 13 and wheelhead slide 16 are respectively operated by ball screws 111, 131 and 161 each driven by a separate suitable electric motor, e.g as shown at 165 via a toothed belt drive 166 in the case of the slide ballscrew 161. The belt drive 166 is shown accommodated in a housing 167.

Parallel raised portions 122 of the table 12 define the workpiece mounting area whilst end portions 123 receive any necessary equipment for the purpose of the grinding operation such as a wheel dresser.

When in operation the wheelhead 15 is usually reciprocated for pendulum grinding or fed slowly for creep feed grinding along the X axis by its slide 16 on the saddle 13. Grinding cut is set by raising the knee 11, table 12 and workpiece along the Y axis and traverse of the wheelhead 15 across the workpiece as grinding proceeds is effected by appropriate movement of the saddle 13 along the Z axis. On completion of the grinding operation the table 12 is lowered for enabling the ground workpiece to be readily removed clear of the grinding wheel 17.

Coolant from the wheelhead mounted nozzle 18 (or nozzles) drains from the table 12 into a trough 20 fixed underneath the table 12 and from thence to a coolant reservoir tank 21. As a result and due to the fact that the table 12 is not reciprocated swilling or surging of the coolant on the table 12 and in the trough 20 is virtually avoided so that coolant drainage is more predictable and controlled.

Correlated operation of the knee 11, saddle 13 and wheelhead slide 16 is controlled such as by CNC control for performing a required grinding operation or operations which typically may include heavy rough cutting stock removal from the workpiece by longitudinal creep grinding feed of the wheelhead 15 followed by reciprocation of the latter for finish grinding, appropriate grinding wheels 17 being used.

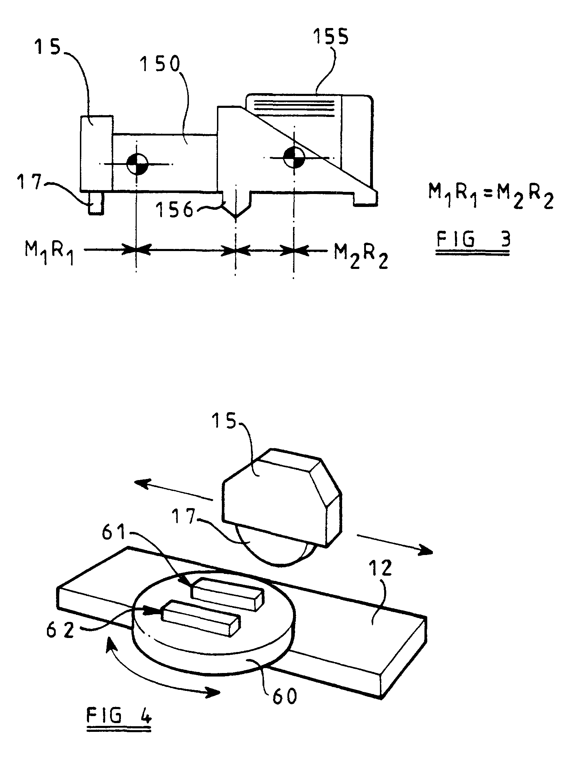

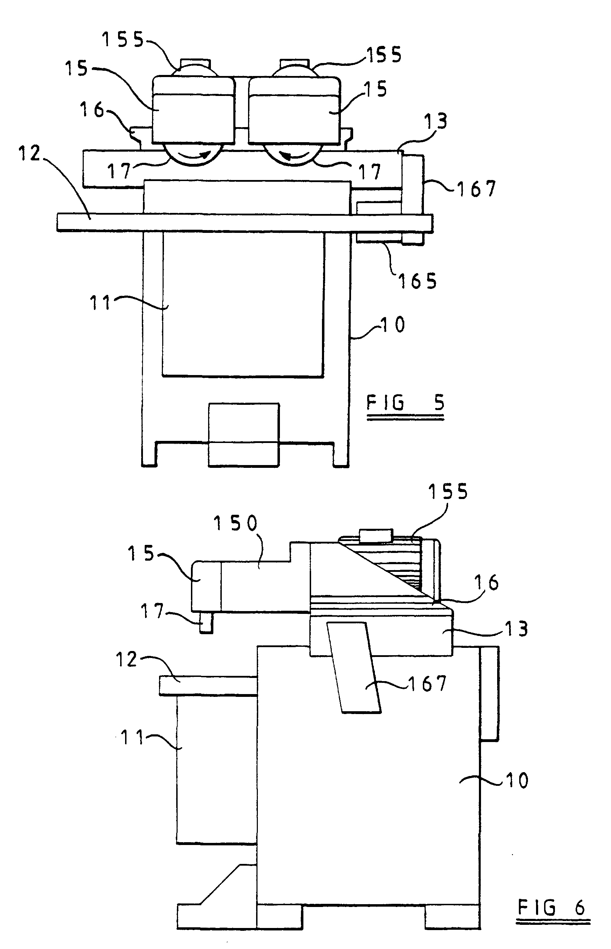

Notable advantageous features of the construction, arrangement and mode of operation of the machine as well as further developments are as follows:-
(i) All the slideways 110, 130 and 160 are fully supported to resist couples thereon due to inertial or other forces and so maintain their geometric accuracy.
(ii) Within practical limits there can be considerable variation in the size of the machine as required. Thus the bed 10 could be extended and still maintain the constructional integrity and stability.
(iii) The moving mass, that is to say, the wheelhead 15 with its carrier 150 and driving motor 155 on the slide 16, remains virtually constant and is not heavy, the only variation being reduction in the diameter of the grinding wheel 17 as wear takes place which is minimal. Thus the moving mass is kept to a minimum and is much less than that of a reciprocating table and workpiece.
(iv) The fact that the worktable 12 does not reciprocate entirely removes a main source of geometric inaccuracy hitherto caused by inertial forces of a reciprocating table and workpiece.
(v) By suitable balanced construction of the wheel head 15 and its carrier 150 and motor 155 there need be no couple applied on the V slide 156 of the carrier 150 as shown in Figure 3 where M₁ R₁ = M₂R₂. In this instance the carrier 150 is shown arranged for direct slidable mounting on the slideways 160 of the saddle 13.
(vi) Since there is no reciprocation of the work table 12 and little or no projection of moving parts, the machine can be of compact form requiring only a minimum of operational floor space or "footprint".
(vii) The complete absence of a tall slender column avoids all disadvantages in this respect and enables the overall height of the machine to be kept to a minimum.
(viii) In conventional grinding machines such as the prior art machines already referred to, the wheel head carrier is mounted on live slide means which is prone to inaccuracies and vibration. On the other hand in the present machine it can be mounted in practice on damped slidable support. Also the accurate and sensitive vertical feed Y is that of the work table 12 on its support knee 11.
(ix) The compact form and construction of the machine also lends itself to suitable protective enclosure in a casing or cabinet which may carry a control panel etc and have windowed doors or the like so that a workpiece and the grinding operation is readily visible and convenient access is afforded.
(x) From the ergonomic point of view the working height of the worktable 12 and a workpiece thereon remains substantially constant for the convenience of an operator so that bending down or reaching upwards is avoided or minimised. Furthermore larger and usually heavier workpieces or components are more easily loaded onto, or unloaded from, the worktable 12 since the latter already assumes a lower position to accommodate such workpieces during grinding and is lowered even further for such loading or unloading.
(xi) Also in regard to loading and unloading the machine a further development is made possible by the non reciprocating table 12 which remains substantially fixed during a grinding operation. This enables an indexing table 60 (Figure 4) to be provided on the work table 12 and provide two (or more) fixtures 61, 62 each for the positioning of one or more workpieces for grinding. Thus while workpiece grinding is taking place on one fixture 61 the other foremost fixture 62 can be unloaded, cleaned and reloaded ready for indexed movement to the grinding position and so on.
   This could result in a virtually continuous grinding operation considerably or doubly increasing productivity since from past experience loading/unloading time has nearly always equalled grinding time, i.e. on current machines. Such an advantage is obtained with little need to improve grinding stock removal rates which have not greatly increased for many years.
(xii) In contrast to current machines the horizontal slideways 130, 160 i.e. of the saddle 13 and wheelhead slide 16 are above the wet grinding zone of the grinding wheel 17 and workpiece so that they are very much less susceptible to contamination by coolant dispersal from the grinding zone.
(xiii) The wheelhead motor 155 which is a major source of heat is advantageously situated on top of the machine so that all heat escapes upwardly by convection without any adverse effects in this regard on the machine's geometrical accuracy.
(xiv) In the remote likelihood of failure of Y axis support of the worktable, the knee 11 and table 12 drop down under gravity so that the workpiece falls clear of the grinding wheel 17. In current machines failure of Y axis support of the wheelhead causes the grinding wheel to fall onto the workpiece usually with resultant severe damage to the wheel and workpiece.
(xv) Current machines tend to fall into categories of pendulum or creep feed grinders with the ability of accurate reciprocating work table reversal and also the facility of providing fast short stroke reciprocation of the table. The machine according to this invention and as herein described above is capable of performing all these functions, e.g. in combination to carry out composite grinding cycles.
(xvi) The machine bed 10 may be of hollow cast or fabricated construction and need contain no moving parts or mechanism but may be used to accommodate electrical cabling or trunking. Otherwise internal use is not necessary in which case it is possible to employ a block of non-metallic material which may be solid or partly hollow (for economic use of the material) such as hydraulic concrete or epoxy granite or similar material of suitable high quality. Naturally occurring material of this kind may be used such as granite or other hard stone or marble.

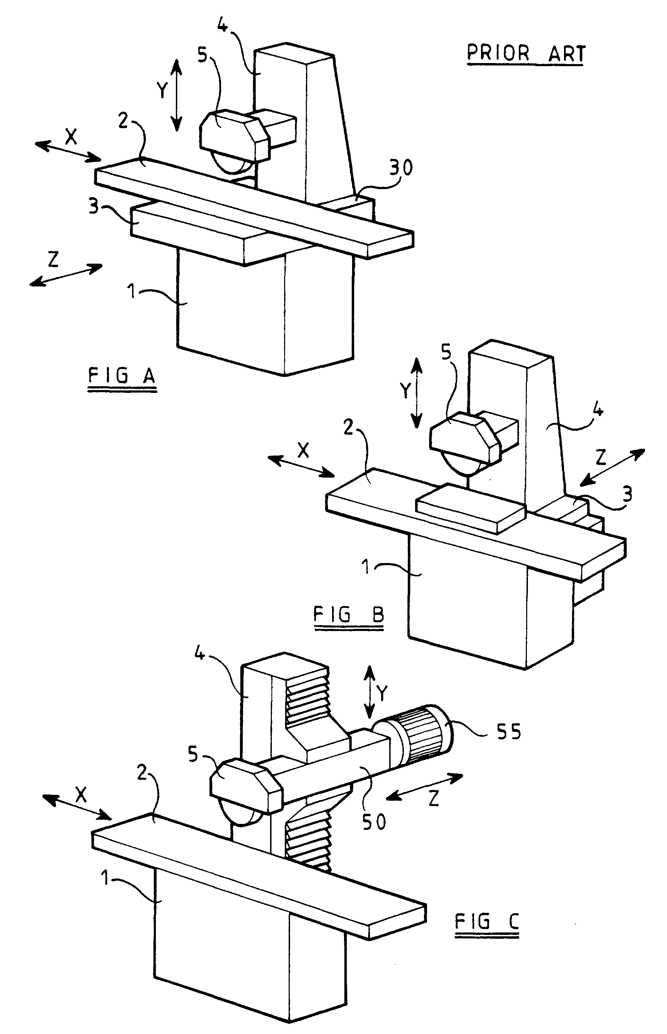

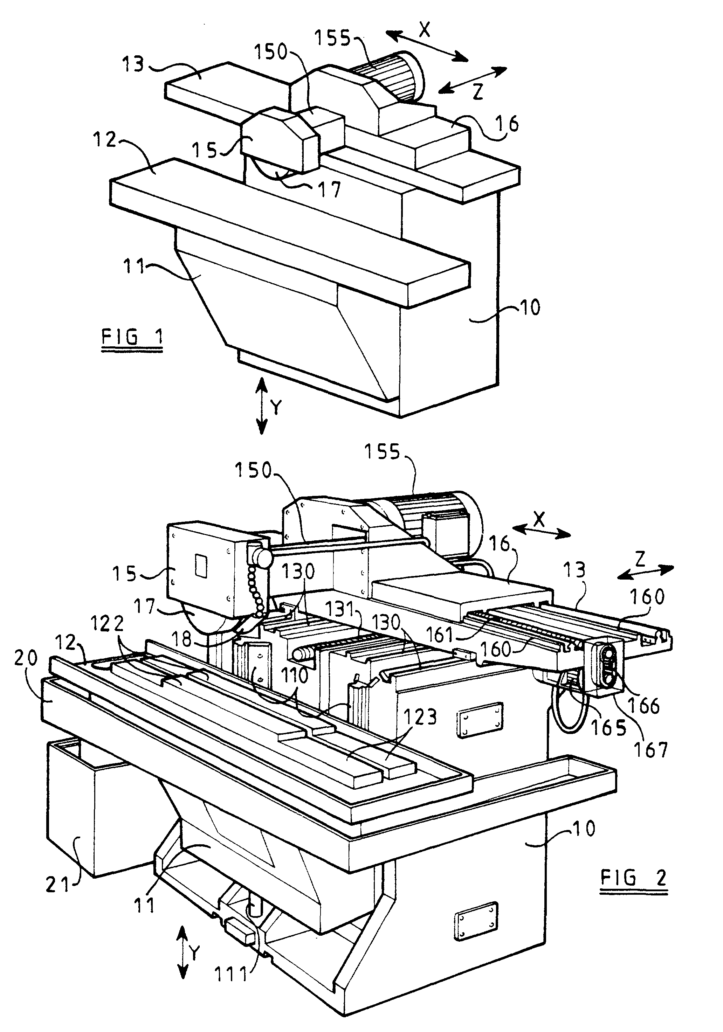

In an alternative arrangement of the machine the saddle 13 may be movable or reciprocatable on the bed 10 along the X axis and the wheelhead assembly 15, 150 and 155 is then carried by the saddle 13 for such movement therewith and for relative traversing movement along the Z axis. Whereas such an arrangement is possible with all the advantages above referred to an exception is that the X axis reciprocatable mass of the wheelhead assembly 15, 150 and 155 and saddle 13 would be considerably greater than that of the wheelhead assembly 15, 150 and 155 and slide 16 of the preferred arrangement described above with reference to Figures 1 and 2.

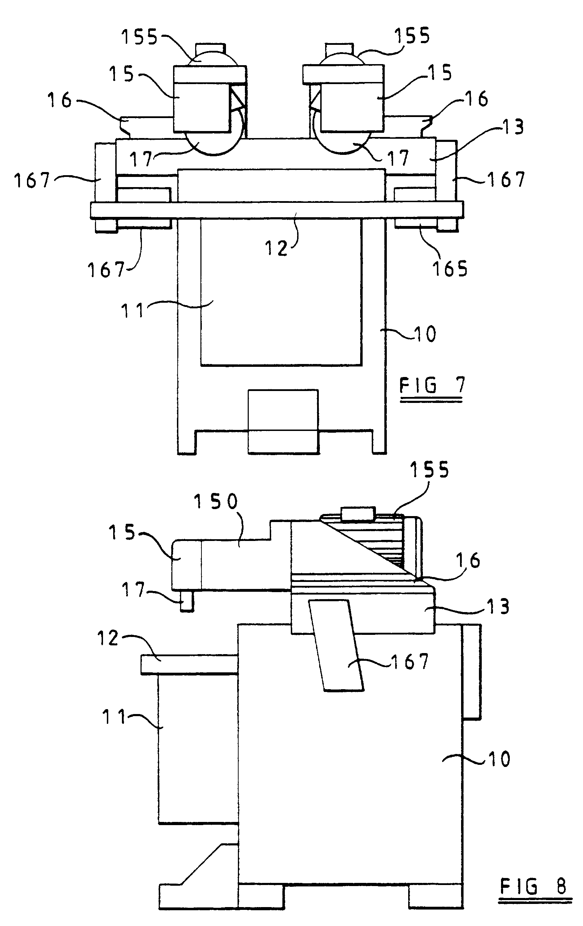

In still further advantageous developments of the machine as firstly shown diagrammatically in Figures 5 to 8, a pair of wheel heads 15 and grinding wheels 17 are employed either in tandem on a common slide 16 (Figures 5 and 6) or independently on separate slides 16 (Figures 7 and 8) or for similar slidable mounting on the saddle 13. In the latter case the separate slides 16 are separately driven by a corresponding motor 165.

Thus one grinding wheel 17 may be operated for rough cutting stock removal from a workpiece by longitudinal creep grinding and the other for fine finish reciprocating grinding, appropriate types of wheel being employed. As a result the compromise of a single wheel is avoided so that improved component quality can be obtained.

As shown each wheel 17 is driven by a separate driving motor 155 so that the individual wheels can be run at their optimum speeds whilst separate coolant supply can be applied to each wheel to suit its mode of operation. As indicated in Figure 5 the two wheels 17 may be contra rotatable.

With each wheel inturn brought into grinding contact with a workpiece or component on the work table 12, complete grinding of the workpiece can be quickly carried out. As a result grinding cycle times can be greatly reduced. In conjunction with the twin wheel arrangement cycle times can be further reduced and virtually continuous grinding provided by the use of an indexing table 60 as already described with reference to Figure 4.

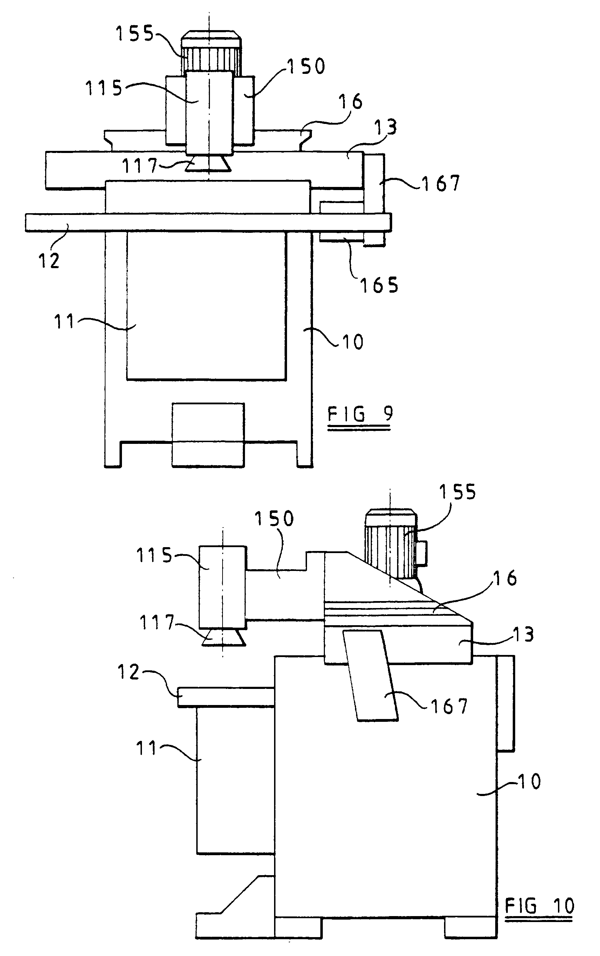

In a still further development shown in Figures 8 and 9 vertical spindle grinding can be provided either singly or in a twin tandem or independent arrangement similar to that described above and with the same practical advantages.

The grinding wheel or disc 117, or each such wheel in a twin arrangement, is rotated about its vertical axis on its wheel head 115 by its driving motor 155 also shown mounted about a vertical axis. Again twin wheels or discs 117 would be separately motor driven.

In the twin arrangements a wheel dresser can be mounted on each end part of the work table 12 one to each wheel 17 or disc 117 and again the mode of dressing can be optimised to the grinding operation and wheel type.

It is to be understood that any twin combination of horizontal and vertical grinding wheel spindles can be employed and in some cases more than two spindles and wheels may be used in a multi-spindle arrangement i.e. according to the nature of the workpiece or workpieces to be ground.

It will be appreciated that together with its several advantages, the general arrangement of grinding or like machine tool herein described lends itself to the provision of the abovementioned twin or multi wheel arrangements whether of horizontal or vertical spindle form or combinations thereof as well as a single vertical spindle arrangement. This is especially due to the absence of the wheel head carrying column of conventional machines (see Figures A, B and C), which column tends to severely restrict or prevent the use of such wheel arrangements and their required modes of operation.

It is to be understood that various other modifications may be made to the machine within the scope of the invention defined in the claims whilst the invention is also applicable to other machine tools for machining workpieces of metal or other material in a similar manner.

## Claims

1. A grinding or like machine tool for reciprocating or uni-directional surface or similar grinding or machining of a workpiece or workpieces and in which a grinding wheel head or like machining head (15) is slidably supported on the machine bed (10) for operative movement over a work table (12) mounted on the machine bed (10); is **characterised by** the machine bed (10) consisting of a generally rectangular body without a column and having support means (11) directly and slidably mounted (110) on the front face thereof so as to extend forwardly therefrom and operable (111) for vertical sliding movement or adjustment relative to said front face of the machine bed (10); said support means (11) carrying the work table (12) for corresponding Y axis vertical movement or adjustment only of said work table (12) i.e. for upward feeding movement towards at least one grinding wheel or like machining head (15, 115) or downward withdrawal movement therefrom; and in which the top of the machine bed (10) carries for operable (131) direct horizontal sliding movement (130) thereon a saddle (13) which, in turn, carries for operable (161) direct horizontal sliding movement (160) thereon the or each said grinding wheel or like machining head (15,115) and direct motor drive (155) thereto for said sliding movement (160) at right angles to the sliding movement (130) of the saddle (13) on the top of the machine bed (10) whereby the or each said grinding wheel or like machining head (15, 115) is positioned over the work table (12) and is operable for horizontal X axis reciprocating or uni-directional longitudinal movement and horizontal Z axis traversing movement as required in horizontal planes only in relation to the work table (12) and a workpiece or workpieces when placed thereon by said relative horizontal movements of the saddle (13) and grinding wheel or like machining head or heads (15, 115) thereon on the top of the machine bed (10).

2. A grinding or like machine tool according to claim 1 wherein the support means (11) which carries the work table (12) for "Y" axis vertical sliding movement or adjustment only is such that the work table (12) remains fixed against any horizontal reciprocating or uni-directional longitudinal movement relative to the machine bed (10).

3. A grinding or like machine tool according to claim 1 or 2 wherein the support means (11) which carries the work table (12) is in the form of a knee extending forwardly from the front face of the machine bed (10) for said vertical sliding movement or adjustment thereon.

4. A grinding or like machine tool according to any of the preceding claims wherein the or each grinding wheel or like machining head (15, 115) is slidably carried by the saddle (13) by means of a carrier saddle (16).

5. A grinding or like machine tool according to any of claims 1 to 4 wherein the saddle (13) is slidably carried on the top of the machine bed (10) for Z axis traversing movement thereon at right angles to the work table (12), and the or each wheel or like machining head (15, 115) is slidably carried by the saddle (13) for X axis reciprocating or uni-directional longitudinal movement parallel with and over the work table (12) and also Z axis traversing movement thereover by the saddle (13).

6. A grinding or like machine tool according to any of claims 1 to 4 wherein the saddle (13) is slidably or similarly carried on the top of the machine bed (10) for X axis reciprocating or uni-directional longitudinal movement thereon parallel with the work table (12), and the or each wheel or like machining head (15, 115) is slidably carried by the saddle (13) for Z axis traversing movement at right angles to and over the work table (12) and also X axis reciprocating or uni-directional longitudinal movement thereover by the saddle (13).

7. A grinding or like machine tool according to any of the preceding claims wherein slidable support means (11, 110) for Y axis vertical movement or adjustment of the work table (12) and slidable support (130) of the saddle (13) and slidable support (160) of the or each grinding wheel or like machining head (15, 115) on the saddle (13), or at least one or more of them is or are arranged or supported so as to resist couples on said slidable support or supports due to inertial or other force in order to maintain geometric accuracy.

8. A grinding or like machine tool according to claim 7 wherein the or each grinding wheel or like machining head (15, 115) and its direct motor drive (155) and a carrier (150) for them are of balanced constructing whereby substantially no couple is applied to their slidable support (156, 160) on the saddle (13).

9. A grinding or like machine tool according to any of the preceding claims wherein a fixed receptacle or trough (20) is provided under the work table (12) and from the machine bed (10) for receiving coolant draining from the work table (12) in a controlled manner, i.e. against swilling or surging of the coolant on the table (12) and in the receptacle or trough (20).

10. A grinding or like machine tool according to any of the preceding claims wherein an indexing support or table (60) is provided mountable on the work table (12) and provides two or more fixtures (61, 62) each for the positioning of one or more work pieces for grinding or machining so that while such grinding or machining is taking place on one fixture (61) any previously ground or machined work piece or work pieces can be unloaded from another fixture (62) at an unloading/loading position which, after work piece loading or re-loading thereat, is indexed to a grinding or machining position so that a virtually continuous grinding or machining operation can be provided.

11. A grinding or like machine tool according to claim 10 wherein the indexing support or table (60) is rotatably mountable on the work table (12) for indexing movement.

12. A grinding or like machine tool according to any of the preceding claims wherein the saddle (13) slidably carries at least two grinding wheel heads or like machining heads (15, 115) for sliding movement at right angles to the movement of the saddle (13) and wherein said grinding wheel or like machining heads (15, 115) are either slidably movable together in tandem on the saddle (13) or are independently movable thereon and over the work table (12).

13. A grinding or like machine tool according to any of the preceding claims wherein the or each grinding wheel or like machining head (15, 115) is arranged to carry a grinding wheel (117) or like tool for rotation about a substantially vertical axis over the work table (12).

14. A grinding or like machine tool according to claim 12 or 13 wherein the grinding wheel or like machining heads (15, 115) are arranged to provide support for a combination of different types of grinding wheels (17, 117) or like tools carried for rotation about substantially horizontal and substantially vertical axes over the work table (12).

15. A grinding or like machine tool according to claim 12, 13 or 14 wherein each grinding wheel or like machining head (15, 115) is separately motor driven (155).

## Patentansprüche

1. Schleifmaschine oder ähnliche Werkzeugmaschine zum pendelnden oder unidirektionalen Oberflächenschleifen oder ähnlichem Schleifen bzw. Bearbeiten eines Werkstücks bzw. Werkstücken wobei ein Schleifspindelstock oder ähnlicher Bearbeitungskopf (15) gleitfähig auf dem Maschinensockel (10) gelagert ist, so dass eine Arbeitsbewegung über einem auf dem Maschinensockel (10) angebrachten Werkstücktisch (12) stattfindet; **dadurch gekennzeichnet, dass** der Maschinensockel (10) aus einem im Wesentlichen rechteckigen Gehäuse ohne Säule besteht und über eine Tragvorrichtung (11) verfügt, die direkt und gleitfähig (110) an dessen Frontseite angebracht ist, so dass sie von dort aus nach vorne ragt und in einer vertikalen Gleitbewegung bzw. Justierung relativ zur Frontseite des Maschinensockels (10) bewegt werden kann (111), weiter **dadurch gekennzeichnet, dass** die Tragvorrichtung (11) den Werkstücktisch (12) trägt, so dass eine entsprechende vertikale Bewegung bzw. Justierung des Werkstücktischs (12) allein in Y-Achsenrichtung für die Zuführung nach oben an mindestens eine Schleifscheibe bzw. einen ähnlichen Bearbeitungskopf (15, 115) bzw. das Zurückziehen davon nach unten möglich ist, und wobei der obere Teil des Maschinensockels (10) einen Schlitten (13) trägt, der in einer direkten horizontalen Gleitbewegung (130) bewegt (131) werden kann und der seinerseits den Schleifspindelstock bzw. die Schleifspindelstöcke bzw. einen ähnlichen Bearbeitungskopf (15, 115) und den Direktmotorantrieb (155) trägt, in einer direkten horizontalen Gleitbewegung (160) bewegt (161) werden können, so dass sie sich im rechten Winkel zur Gleitbewegung (130) des Schlittens (13) auf dem Maschinensockel (10) bewegen, wobei der Schleifspindelstock bzw. die Schleifspindelstöcke bzw. ein ähnlicher Bearbeitungskopf (15, 115) über dem Werkstücktisch (12) positioniert ist und je nach Bedarf nur in horizontalen Ebenen in Relation zum Werkstücktisch (12) und einem darauf gelegten Werkstück bzw. Werkstücken durch die relativen horizontalen Bewegungen des Schlittens (13) und des Schleifspindelstocks bzw. ähnlichen Bearbeitungsköpfen (15, 115) darauf oben auf dem Maschinensockel (10) in einer horizontalen Pendellängsbewegung bzw. unidirektionalen Längsbewegung in X-Achsenrichtung und in horizontaler Querbewegung in Z-Achsenrichtung bewegt werden kann.

2. Schleifmaschine oder ähnliche Werkzeugmaschine nach Anspruch 1, wobei die Tragvorrichtung (11), die den Werkstücktisch (12) nur für die vertikale Gleitbewegung bzw. Justierung in Y-Achsenrichtung trägt, so ausgeführt ist, dass der Werkstücktisch (12) gegenüber allen horizontalen Pendelbewegungen bzw. unidirektionalen Bewegungen in Längsrichtung relativ zum Maschinensockel (10) fest bleibt.

3. Schleifmaschine oder ähnliche Werkzeugmaschine nach Anspruch 1 oder 2, wobei die Tragvorrichtung (11), die den Werkstücktisch (12) trägt, als von der Frontseite des Maschinensockels (10) nach vorne ragender Winkeltisch für die vertikale Gleitbewegung bzw. Justierung daran ausgeführt ist.

4. Schleifmaschine oder ähnliche Werkzeugmaschine nach einem der zuvor genannten Ansprüche, wobei der Schleifspindelstock bzw. die Schleifspindelstöcke bzw. ein ähnlicher Bearbeitungskopf (15, 115) mittels eines Trägerschlittens (16) gleitfähig vom Schlitten (13) getragen wird.

5. Schleifmaschine oder ähnliche Werkzeugmaschine nach einem der Ansprüche 1 bis 4, wobei der Schlitten (13) gleitfähig oben auf dem Maschinensockel (10) gelagert ist und in Z-Achsenrichtung rechtwinklig zum Werkstücktisch (12) quer darauf bewegt werden kann, und wobei jeder Schleifspindelstock bzw. ähnlicher Bearbeitungskopf (15, 115) gleitfähig auf dem Schlitten (13) gelagert ist und in X-Achsenrichtung parallel zu und über dem Werkstücktisch (12) pendelnd oder unidirektional bewegt werden kann und außerdem durch den Schlitten (13) in Z-Achsenrichtung quer dazu bewegt werden kann.

6. Schleifmaschine oder ähnliche Werkzeugmaschine nach einem der Ansprüche 1 bis 4, wobei der Schlitten (13) gleitfähig oder ähnlich oben auf dem Maschinensockel (10) gelagert ist und in X-Achsenrichtung pendelnd oder unidirektional parallel zum Werkstücktisch (12) darauf bewegt werden kann und wobei jeder Schleifspindelstock bzw. ähnlicher Bearbeitungskopf (15, 115) gleitfähig auf dem Schlitten (13) gelagert ist und in Z-Achsenrichtung rechtwinklig zu und über dem Werkstücktisch (12) quer bewegt werden kann und außerdem durch den Schlitten (13) in X-Achsenrichtung pendelnd oder unidirektional darüber bewegt werden kann.

7. Schleifmaschine oder ähnliche Werkzeugmaschine nach einem der zuvor genannten Ansprüche, wobei die gleitfähige Tragvorrichtung (11, 110) für die vertikale Bewegung bzw. Justierung in Y-Achsenrichtung des Werkstücktischs (12) und die gleitfähige Lagerung (130) des Schlittens (13) und die gleitfähige Lagerung (16) des Schleifspindelstocks bzw. der Schleifspindelstöcke bzw. eines ähnlichen Bearbeitungskopfs (15, 115) oder mindestens eines davon so angeordnet bzw. gelagert sind, dass es auf der gleitfähigen Lagerung wirkenden Momenten infolge Trägheitskräften oder anderen Kräften standhält, um die geometrische Genauigkeit beizubehalten.

8. Schleifmaschine oder ähnliche Werkzeugmaschine nach Anspruch 7, wobei der Schleifspindelstock bzw. die Schleifspindelstöcke bzw. ein ähnlicher Bearbeitungskopf (15, 115) und dessen Direktmotorantrieb (155) sowie ein Träger (150) dafür ausgewogen konstruiert sind, so dass im Wesentlichen kein Moment auf deren gleitfähige Lagerung (156, 160) am Schlitten (13) wirkt.

9. Schleifmaschine oder ähnliche Werkzeugmaschine nach einem der zuvor genannten Ansprüche, wobei unter dem Werkstücktisch (12) und am Maschinensockel (10) ein festes Behältnis oder eine Wanne (20) vorgesehen ist, die auf kontrollierte Weise das vom Werkstücktisch (12) ablaufende Kühlmittel auffängt, so dass das Kühlmittel auf dem Tisch (12) und im Behältnis bzw. der Wanne nicht schwappt.

10. Schleifmaschine oder ähnliche Werkzeugmaschine nach einem der zuvor genannten Ansprüche, wobei ein Schaltträger oder -tisch (60) vorgesehen ist, der auf dem Werkstücktisch (12) angebracht werden kann und zwei oder mehr Spannvorrichtungen (61, 62) hat, mit denen ein oder mehrere Werkstücke zum Schleifen bzw. Bearbeiten positioniert werden können, so dass während des Schleifens bzw. Bearbeitens an einer Spannvorrichtung (61) ein zuvor geschliffenes bzw. bearbeitetes Werkstück an einer Entnahme-/Ladestellung aus der anderen Spannvorrichtung (62) entnommen werden kann und diese Stellung nach dem Laden bzw. Wiederladen eines Werkstücks an eine Schleif- bzw. Bearbeitungsstellung vorgerückt wird, so dass ein praktisch kontinuierlicher Schleif- bzw. Bearbeitungsbetrieb möglich ist.

11. Schleifmaschine oder ähnliche Werkzeugmaschine nach Anspruch 10, wobei der Schaltträger bzw. -tisch (60) für die Vorrückbewegung drehbar auf dem Werkstücktisch (12) angebracht werden kann.

12. Schleifmaschine oder ähnliche Werkzeugmaschine nach einem der zuvor genannten Ansprüche, wobei der Schlitten (13) mindestens zwei Schleifspindelstöcke bzw. ähnliche Bearbeitungsköpfe (15, 115) gleitfähig trägt, so dass sie rechtwinklig zur Bewegung des Schlittens (13) bewegt werden können und wobei die Schleifspindelstöcke bzw. ähnlichen Bearbeitungsköpfe (15, 115) entweder zusammen in Tandemanordnung auf dem Schlitten (13) gleiten können oder unabhängig voneinander darauf and über dem Werkstücktisch (12) bewegt werden können.

13. Schleifmaschine oder ähnliche Werkzeugmaschine nach einem der zuvor genannten Ansprüche, wobei der bzw. jeder Schleifspindelstock bzw. ähnlicher Bearbeitungskopf (15, 115) so angeordnet ist, dass er eine Schleifscheibe (117) oder ein ähnliches Werkzeug aufnehmen kann, das um eine im Wesentlichen senkrechte Achse über dem Werkstücktisch (12) rotiert.

14. Schleifmaschine oder ähnliche Werkzeugmaschine nach Anspruch 12 oder 13, wobei die Schleifspindelstöcke bzw. ähnlichen Bearbeitungsköpfe (15, 115) so angeordnet sind, dass sie eine Kombination von verschiedenen Schleifscheiben (17, 117) bzw. ähnlichen Werkzeugen aufnehmen können, die um im Wesentlichen horizontale und vertikale Achsen über dem Werkstücktisch (12) rotieren.

15. Schleifmaschine oder ähnliche Werkzeugmaschine nach Anspruch 12, 13 oder 14, wobei jeder Schleifspindelstock bzw. ähnlicher Bearbeitungskopf (15, 115) unabhängig von einem Motor (155) angetrieben wird.

## Revendications

1. Machine à rectifier ou machine-outil similaire pour la rectification de surfaces planes, le meulage ou l'usinage similaires unidirectionnels ou à mouvement alternatif d'une ou de plusieurs pièces à travailler et dans laquelle une poupée porte-meule ou tête porte-outil similaire (15) est supportée sur le banc de la machine (10) de manière à pouvoir y coulisser pour décrire un mouvement de travail au-dessus d'une table porte-pièce (12) montée sur le banc de la machine (10) ; **caractérisée par le fait que** le banc de la machine (10) consiste en un corps généralement rectangulaire sans montant et comportant un moyen de support (11) monté directement et de manière à pouvoir coulisser (110) sur la face avant du banc de manière à se projeter en avant à partir de celui-ci et pouvant être commandé (111) pour un mouvement de coulissement ou un réglage vertical par rapport à ladite face avant du banc de la machine (10) ; ledit moyen de support (11) portant la table porte-pièce (12) pour un déplacement ou un simple réglage vertical correspondant dans l'axe Y de ladite table porte-pièce (12), c'est à dire pour un mouvement d'avance vers le haut vers au moins une poupée porte-meule ou tête porte-outil similaire (15, 115) ou pour un mouvement de retrait vers le bas par rapport à celle-ci ; et dans laquelle le haut du banc de la machine (10) porte sur lui, pour permettre un coulissement horizontal direct (130) pouvant être commandé (131), un coulisseau de banc (13) qui, à son tour, porte sur lui, pour permettre un coulissement horizontal direct (160) pouvant être commandé (161), ladite ou chaque dite poupée porte-meule ou tête porte-outil similaire (15, 115) et son moteur d'entraînement direct (155) pour ledit mouvement de coulissement (160) perpendiculaire au mouvement de coulissement (130) du coulisseau du banc (13) au-dessus du banc de la machine (10), disposition selon laquelle ladite ou chaque dite poupée porte-meule ou tête porte-outil similaire (15, 115) est positionnée au-dessus de la table porte-pièce (12) et peut être commandée pour permettre un déplacement longitudinal alternatif ou unidirectionnel horizontal dans l'axe X et un déplacement transversal horizontal dans l'axe Z, déplacements nécessaires dans les plans horizontaux uniquement par rapport à la table porte-pièce (12) et à une ou plusieurs pièces à travailler lorsqu'elles sont montées sur celle-ci, par lesdits déplacements horizontaux relatifs du coulisseau du banc (13) et de la poupée porte-meule ou de la tête ou des têtes porte-outils similaires (15, 115) sur celui-ci au dessus du banc de la machine (10).

2. Machine à rectifier ou machine-outil similaire selon la revendication 1 dans laquelle le moyen de support (11) qui porte la table porte-pièce (12) pour un coulissement ou un simple réglage vertical dans l'axe 'Y' est tel que la table porte-pièce (12) reste fixée relativement à tout déplacement longitudinal alternatif ou unidirectionnel horizontal par rapport au banc de la machine (10).

3. Machine à rectifier ou machine-outil similaire selon la revendication 1 ou 2 dans laquelle le moyen de support (11) qui porte la table porte-pièce (12) est sous la forme d'une console se projetant en avant depuis la face avant du banc de la machine (10) pour ledit coulissement ou réglage vertical sur le banc.

4. Machine à rectifier ou machine-outil similaire selon l'une quelconque des revendications précédentes dans laquelle la ou chaque poupée porte-meule ou tête porte-outil similaire (15,115) est portée, de manière à pouvoir coulisser, par le coulisseau du banc (13) au moyen d'un chariot porte-outil (16).

5. Machine à rectifier ou machine-outil similaire selon l'une quelconque des revendications 1 à 4 dans laquelle le coulisseau du banc (13) est porté, de manière à pouvoir coulisser, au-dessus du banc de la machine (10) pour permettre un déplacement transversal dans l'axe Z sur le banc, perpendiculaire à la table porte-pièce (12), et la ou chaque poupée porte-meule ou tête porte-outil similaire (15, 115) est portée, de manière à pouvoir coulisser, par le coulisseau du banc (13) pour permettre un déplacement longitudinal alternatif ou unidirectionnel dans l'axe X parallèle avec la table porte-pièce (12) et au-dessus de celle-ci et aussi un déplacement transversal dans l'axe Z au-dessus de la table par le coulisseau du banc (13).

6. Machine à rectifier ou machine-outil similaire selon l'une quelconque des revendications 1 à 4 dans laquelle le coulisseau du banc (13) est porté, de manière à pouvoir coulisser ou de manière similaire, au-dessus du banc de la machine (10) pour permettre un déplacement longitudinal alternatif ou unidirectionnel dans l'axe X sur le banc, parallèlement à la table porte-pièce (12), et la ou chaque poupée porte-meule ou tête porte-outil similaire (15, 115) est portée, de manière à pouvoir coulisser, par le coulisseau du banc (13) pour permettre un déplacement transversal dans l'axe Z perpendiculaire à la table porte-pièce (12) et au-dessus de celle-ci et aussi un déplacement longitudinal alternatif ou unidirectionnel dans l'axe X au-dessus de la table par le coulisseau du banc (13).

7. Machine à rectifier ou machine-outil similaire selon l'une quelconque des revendications précédentes dans laquelle le moyen de support capable de coulisser (11, 110) pour permettre un déplacement ou un réglage vertical dans l'axe Y de la table porte-pièces (12) et le support capable de coulisser (130) du coulisseau du banc (13) et le support capable de coulisser (160) de la ou chaque poupée porte-meule ou tête porte-outil similaire (15,115) sur le coulisseau du banc (13), ou au moins un ou plusieurs d'entre eux sont disposés ou supportés de manière à résister aux couples appliqués sur ledit ou lesdits supports capables de coulisser par la force d'inertie ou toute autre force afin de maintenir la précision géométrique.

8. Machine à rectifier ou machine-outil similaire selon la revendication 7 dans laquelle le ou chaque poupée porte-meule ou tête porte-outil (15, 115) et son moteur d'entraînement direct (155) et un chariot (150) pour eux ont une construction équilibrée grâce à laquelle essentiellement aucun couple n'est appliqué sur leur support capable de coulisser (156, 160) sur le coulisseau du banc (13).

9. Machine à rectifier ou machine-outil similaire selon l'une quelconque des revendications précédentes dans laquelle un réceptacle fixe ou bac (20) est prévu sous la table porte-pièces (12) et depuis le banc de la machine (10) pour recevoir le fluide de refroidissement s'écoulant de la table porte-pièces (12) d'une manière contrôlée, c'est-à-dire en protégeant contre tout déversement ou toute augmentation subite du fluide de refroidissement sur la table (12) et dans le réceptacle ou cuve (20).

10. Machine à rectifier ou machine-outil similaire selon l'une quelconque des revendications précédentes dans laquelle un support ou une table d'indexage (60) est prévue, pouvant être montée sur la table porte-pièce (12), et fournit deux montages de fixation ou plus (62, 62), chacun pour le positionnement d'une ou de plusieurs pièces à rectifier ou à usiner de sorte que, lorsque cette rectification ou cet usinage est en train d'être effectué sur un montage (61), toute pièce antérieurement rectifiée ou usinée, qu'il s'agisse d'une seule ou de plusieurs, peut être déchargée de l'autre montage (62) dans une position de déchargement/chargement qui, après le chargement ou le rechargement de la pièce dans cette position, est indexé dans une position de rectification ou d'usinage de sorte qu'une opération de rectification ou d'usinage pratiquement continue peut être obtenue.

11. Machine à rectifier ou machine-outil similaire selon la revendication 10 dans laquelle le support ou la table d'indexage (60) peut être montée, de manière à pouvoir tourner, sur la table porte-pièce (12) pour un mouvement d'indexage.

12. Machine à rectifier ou machine-outil similaire selon l'une quelconque des revendications précédentes dans laquelle le coulisseau du banc (13) porte, de manière à ce qu'elles puissent coulisser, au moins deux poupées porte-meules ou têtes porte-outils similaires (15,115) pour permettre un coulissement perpendiculaire au déplacement du coulisseau du banc (13) et dans laquelle lesdites poupées porte-meules ou têtes porte-outils similaires (15, 115) peuvent soit être déplacées ensemble en tandem par coulissement sur le coulisseau du banc (13), soit être déplacées indépendamment sur celui-ci et au-dessus de la table porte-pièce (12).

13. Machine à rectifier ou machine-outil similaire selon l'une quelconque des revendications précédentes dans laquelle la ou chaque poupée porte-meule ou tête porte-outil similaire (15,115) est disposée de manière à porter une meule (117) ou un outil similaire pour permettre une rotation autour d'un axe essentiellement vertical au-dessus de la table porte-pièce (12).

14. Machine à rectifier ou machine-outil similaire selon l'une quelconque des revendications 12 ou 13 dans laquelle la poupée porte-meule ou les têtes porte-outils similaires (15, 115) sont disposées pour fournir un support pour une combinaison de différents types de meules (17, 117) ou d'outils similaires portés de façon à permettre une rotation autour d'axes essentiellement horizontaux et essentiellement verticaux au-dessus de la table porte-pièce (12).

15. Machine à rectifier ou machine-outil similaire selon l'une quelconque des revendications 12, 13 et 14 dans laquelle chaque poupée porte-meule ou tête porte-outil similaire (15, 115) est entraînée séparément par un moteur (155).
